# EUROPÄISCHE PATENTSCHRIFT

(11) **EP 1 426 854 B1**
(45) Veröffentlichungstag und Bekanntmachung des Hinweises auf die Patenterteilung: **21.11.2007**
(21) Anmeldenummer: 03027829.5
(22) Anmeldetag: 04.12.2003
(51) Int. Cl.: G06F 3/023

(54) **Verfahren zur automatischen Bestimmung einer gültigen oder ungültigen Tasteneingabe**
Method for the automatic determination of a valid or invalid key input
Méthode pour déterminer automatiquement la validité ou l'invalidité d'une entrée sur un clavier

(30) Priorität: 06.12.2002 DE 10257070
(43) Veröffentlichungstag der Anmeldung: 09.06.2004
(73) Patentinhaber: Schott AG, 55122 Mainz (DE)
(72) Erfinder: Engelmann, Harry, Dipl.-Ing., 55218 Ingelheim (DE); Schaupert, Kurt, Dr., 65719 Hofheim (DE)
(74) Vertreter: Fuchs

(56) Entgegenhaltungen:
- EP-A- 0 768 598
- EP-A- 1 191 430
- WO-A-02/42857
- GB-A- 2 022 264
- GB-A- 2 263 184
- US-A- 5 239 152
- US-A- 5 334 976
- US-A- 5 594 222
- PATENT ABSTRACTS OF JAPAN Bd. 014, Nr. 321 (P-1074), 10. Juli 1990 (1990-07-10) -& JP 02 105913 A (OMRON TATEISI ELECTRON CO), 18. April 1990 (1990-04-18)

## Beschreibung

Die Erfindung betrifft ein Verfahren zur automatischen Bestimmung einer gültigen oder ungültigen Tasteneingabe bei einem Tastenfeld aus Tasten, die benachbart zueinander angeordnet sind.

Immer mehr Geräte werden mit Hilfe von Tastenfeldern gesteuert. Dazu zählen beispielsweise Computer, Mobiltelefone, Organizer, Fernbedienungen und viele andere mehr. Diese Geräte werden im Zuge der Miniaturisierung immer kleiner konzipiert. Bei der Miniaturisierung der Tasten des Tastenfeldes ergibt sich eine natürliche Grenze durch die Größe des Fingers eines Erwachsenen, der das Tastenfeld noch bedienen können soll. Bei zu kleinen Tasten ist die Wahrscheinlichkeit sehr hoch, dass gleichzeitig zwei oder mehr Tasten statt nur einer Taste betätigt werden, was zu nicht eindeutigen Tasteneingaben führt.

Eine Möglichkeit, diesem Problem zu begegnen, besteht darin, die Tasten mit einer Steuerelektronik zu verbinden, die bei gleichzeitiger Betätigung mehrerer Tasten das betreffende Gerät abschaltet.

Die US 5,973,621 beschreibt ein Tastenfeld aus Tasten, die benachbart zueinander, entlang eines regelmäßigen Rasters flächig angeordnet sind. Bei den Tasten handelt es sich um mechanische Tastschalter. Um auch Erwachsenen mit großen Fingern das Bedienen eines miniaturisierten Tastenfeldes zu erlauben, werden die Tastenfeldbezeichnungen an den Zwischenräumen der Tastschalter angeordnet, anstatt wie üblich jedem Tastschalter eine Tastenfeldbezeichnung zuzuordnen. Insbesondere werden immer beispielsweise vier oder sechs benachbarte Tastschalter, die zusammen einer Fingerfläche entsprechen, einer Tastenfeldbezeichnung zugeordnet. Dies setzt voraus, dass der Fingerdruck mittig, d.h. an der Kreuzung der Zwischenräume erfolgt.

Gegebenenfalls kann auch eine Zuordnung einer Tastenfeldbezeichnung zu einzelnen Tastschaltern überlagert sein. Zur Auswertung der Tasteneingabe werden dann die Tastenfeldschalter in zwei Kategorien eingeteilt: Tastschalter, die mit einer eigenen Tastenfeldbezeichnung belegt sind und Tastenschalter, die nur zu einer Zwischenraumbelegung gehören. Es wird diejenige Tastenfeldbelegung als gültige Tasteneingabe gewertet, bei der nur Tastschalter einer Kategorie ein Signal erzeugen.

Eine andere Art der Auswertung bei der US 5,973,621 besteht darin, die Teilsignale der einzelnen Tastschalter nach Intensität zu differenzieren und nach Ermittlung eines Intensitätsmaximums bei einem der Tastschalter zu prüfen, ob hinreichend entfernte Tastschalter gleichzeitig kein Signal erzeugen.

In der GB 2 263 184 A wird vorgeschlagen, die Tasten so nah aneinander anzuordnen, dass in der Regel mehr als eine Taste gleichzeitig betätigt wird. Es ist von vornherein vorgegeben, zu welcher Haupttaste wie viele und welche Nebentasten gedrückt eine müssen. Die Elektronik ist so ausgelegt, dass jedes Mal geprüft wird, ob alle zugeordneten Nebentasten zusammen mit der Haupttaste betätigt wurden, und nur dann auch die Tasteneingabe der Haupttaste zugeordnet wird. Die Möglichkeit, dass bei Betätigung einer Haupttaste nicht alle zugeordneten Nebentasten mitbetätigt werden, ist nicht erfasst. Dieser Fall kann aber insbesondere eintreten, wenn eine Tastatur durch Benutzer mit unterschiedlichen Fingergrößen benutzt wird. Für diesen Fall wird vorgeschlagen, unterschiedlich dimensionierte Tastaturen vorzuhalten.

Aufgabe der vorliegenden Erfindung ist es, die Nachteile des Standes der Technik zu überwinden.

Sie wird gelöst durch ein Verfahren gemäß Anspruch 1. Bevorzugte Ausführungsformen finden sich in den Ansprüchen 2 bis 6.

Aufgrund des erfindungsgemäßen Verfahrens kann trotz Miniaturisierung des Tastenfeldes jeder Taste genau eine Funktion zugeordnet werden. Dies erhöht nicht nur die Bedienbarkeit, sondern ist auch kostengünstig, da die Anzahl der Tasten nicht über die Anzahl der Tastfunktion erhöht wird.

Zunächst werden jeder Taste als Haupttaste unmittelbar benachbart angeordnete Tasten als nächste Nachbarn zugeordnet. Bei den nächsten Nachbarn zu einer Haupttaste handelt es sich um diejenigen Tasten im Umfeld der Haupttaste, bei denen die Wahrscheinlichkeit, dass sie gleichzeitig mit der Haupttaste betätigt werden, am höchsten ist. Für die Zuordnung Haupttaste ― nächste Nachbartaste ist es daher nicht notwendig, dass die Tasten des Tastenfeldes an einem bestimmten Raster ausgerichtet sind. Als Maß für die Betätigungswahrscheinlichkeit kann die Tastenentfernung genommen werden.

Wird durch das Betätigen einer oder mehrerer Tasten ein Signal erzeugt, müssen diverse Prüfungsschritte durchgeführte werden. Im einfachsten Fall würde das Signal von nur einer Taste erzeugt. Dann ist die Tasteneingabe für diese Taste gültig.

In der Regel wird das Signal von mehreren Tasten gleichzeitig erzeugt werden. In diesem Fall muss geprüft werden, ob die Kombination der Tasten, die gemeinsam das Signal erzeugen, auf eine der festgelegten Relationen Haupttaste ― nächster Nachbar abgebildet werden kann. Ist dies möglich, dann ist die Tasteneingabe für die Haupttaste der entsprechenden Relation gültig.

Alle anderen Fälle werden als ungültige Tasteneingabe verworfen.

Um die Anzahl der als ungültig behandelten Fälle zusätzlich zu verringern, hat es sich als vorteilhaft erwiesen, jeder Haupttaste zusätzlich benachbarte Tasten als übernächste Nachbarn zuzuordnen. Dabei handelt es sich um Tasten, bei denen die Wahrscheinlichkeit zwar geringer als bei den nächsten Nachbarn, aber dennoch nicht unerheblich ist, dass sie ebenfalls gleichzeitig mit der Haupttaste betätigt werden, wenn jemand mit einem großen Finger die gewünschte Taste nicht völlig exakt trifft. Stützt man sich auf die Tastenentfernung als Maß für die Betätigungswahrscheinlichkeit, werden die übernächsten Nachbarn weiter von der jeweiligen Haupttaste entfernt sein als die nächsten Nachbarn, aber doch näher sein als übrige Tasten.

Bei den Signalen, die von mehreren Tasten gleichzeitig erzeugt werden, wird dann nicht nur nach einer passenden Relation Haupttaste ― nächster Nachbar, sondern auch nach einer eindeutigen Relation Haupttaste ― nächster Nachbar ― übernächster Nachbar gesucht. Gültig ist die Tasteneingabe wiederum für die eindeutig ermittelte Haupttaste. Diese Ausführungsform bietet sich insbesondere für relativ kleine Tasten an, bei denen so gut wie immer mehrere Tasten gleichzeitig betätigt werden.

Je nach Dimensionierung und Anordnung der Tasten kann es Sinn machen, weiter entfernte Tasten in eine Relation zu einer Haupttaste zu setzen.

Als vorteilhaft hat sich außerdem erwiesen, wenn jedes von einer Taste erzeugte Signal bzw. Teilsignal - im Falle der Erzeugung des Betätigungssignal durch mehrere Tasten gleichzeitig - eine Schaltschwelle überschreiten muss, bevor es bei der Prüfung auf Gültigkeit der Tasteneingabe berücksichtigt wird. Nur Signale mit einer Mindestintensität werden dadurch berücksichtigt. Signale, die durch ein unbeabsichtigtes, nur leichtes Berühren ausgelöst werden, werden dadurch von vornherein aussortiert.

In einer bevorzugten Ausführungsform wird das Verfahren an einem Tastenfeld aus kapazitiven Tasten ausgeführt. Bei kapazitiven Schaltern ist ein Substrat mit einer leitfähigen Schicht versehen. Üblich ist eine Schicht aus Indium-Zinn-Oxid (ITO) auf Glas. Die leitfähige Schicht ist mit vier Elektroden verbunden, von denen zwei gegenüber von einander angeordnet sind. Beide Paare sind unter einem bestimmten Winkel zueinander angeordnet. Jede Elektrode ist an eine Oszillatorschaltung angeschlossen. Wenn das Substrat mit einem Finger berührt wird, verändert die Kapazität des Körpers des Berührenden die Impedanz des kapazitiven Tastschalters. Diese Impedanzänderung verursacht eine Frequenzänderung des Oszillators. Diese Frequenzveränderungen können mittels einem Analogdigitalkonverter in x-y-Koordinaten umgewandelt werden.

In einer weiteren bevorzugten Ausführungsform wird das erfindungsgemäße Verfahren an einem Tastenfeld aus Feldeffekt-Tastschaltern ausgeführt.

Feldeffekt-Tastschalter sind ausführlich in der US 5,594,222 beschrieben.

Der Feldeffekt-Tastschalter basiert auf einer ersten, flächigen Elektrode und einer zweiten Elektrode, die koplanar zur ersten Flächenelektrode um diese herum angeordnet ist. Zwischen beiden Elektroden ist ein Zwischenspalt vorgesehen. Die Elektroden sind entgegengesetzt gepolt. Zwischen beiden Elektroden besteht daher ein zur Elektrodenebene symmetrisches elektromagnetisches Feld, das durch einen Finger auf einer Seite der Elektrodenebene gestört wird. Dies führt zu einem Signal, dass die Taste betätigt wurde.

Im Falle von Feldeffekt-Tastschaltern hat es sich als vorteilhaft erwiesen, wenn jeder Tastschalter ein analoges Signal erzeugt, das sich stetig mit der Beeinflussung des Feldes durch ein betätigendes Objekt, wie z. B. einem Finger gleichsinnig ändert.

Die Erfindung soll anhand der Figuren näher erläutert werden. Dazu zeigen
- Figur 1: einen beispielhaften Ablauf des erfindungsgemäßen Verfahrens und
- Figuren 2a-c: Tastenfelder mit unterschiedlichen Tasteneingaben.

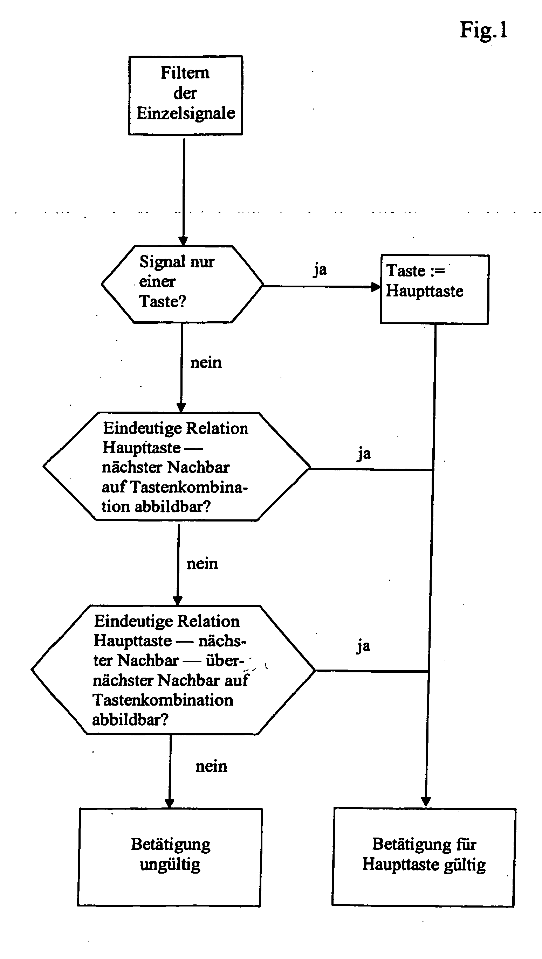

Entsprechend dem Beispiel in Figur 1 werden zunächst alle gleichzeitig erfolgten Signale diskriminiert, d.h. sie müssen eine Mindestintensität aufweisen, um überhaupt berücksichtigt zu werden. In einem nächsten Schritt wird geprüft, ob es sich um ein Signal nur eines Tastschalters handelt. Wenn ja, wird dieser Tastschalter als Haupttaste betrachtet.

Wenn es sich um ein Signal handelt, das sich aus mehreren Einzelsignalen unterschiedlicher Tasten zusammensetzt, wird geprüft, ob dieser Signalkombination bzw. der zugrunde liegenden Tastenkombination eine eindeutige Relation Haupttaste ― nächster Nachbar zuordenbar ist. Ist dies der Fall, steht die Haupttaste fest und die Betätigung ist für diese Haupttaste gültig.

Ist keine eindeutige Relation Haupttaste ― nächster Nachbar zuordenbar, wird weiter geprüft, ob eine eindeutige Relation Haupttaste ― nächster Nachbar ― übernächster Nachbar der Tastenkombination zuordenbar ist. Wenn ja, steht wieder die Haupttaste fest und die Betätigung ist für diese Haupttaste gültig. Wenn nein, wird die Betätigung als ungültig betrachtet.

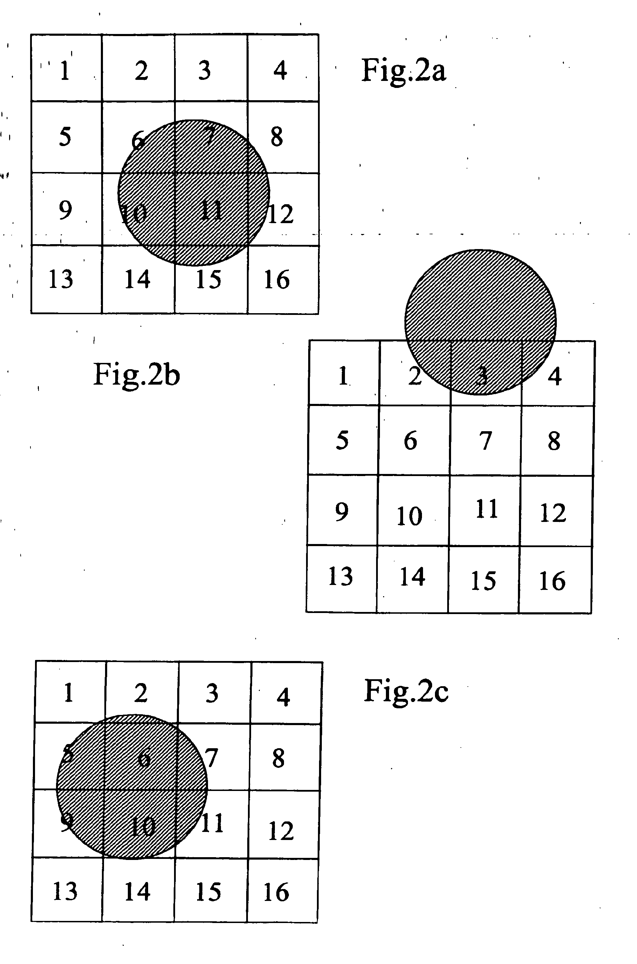

In den Figuren 2a-c sind Tastenfelder mit 16 Feldern gezeigt. Die schraffierte Fläche soll jeweils die Druckfläche eines Fingers auf der Tastenfläche darstellen. Es handelt sich um einen relativ großen Finger auf einem ziemlich kleindimensionierten Tastenfeld. Daher werden bei jeder Berührung gleich mehrere Tasten betätigt.

Bei den vorliegenden Tastenfeldern werden jeder Taste zwei bis vier nächste Nachbarn zugeordnet. Dabei handelt es sich um diejenigen Felder, die eine Kante mit der Haupttaste gemeinsam haben. Die Anzahl der nächsten Nachbarn hängt von der Lage der Haupttaste auf dem Tastenfeld ab. Zum Beispiel werden der Taste 1 als Haupttaste die Tasten 2 und 5 als nächste Nachbarn zugeordnet. Der Taste 10 als Haupttaste werden die Tasten 6, 9, 11, 14 als nächste Nachbarn zugeordnet.

Ferner werden jeder Taste als Haupttaste ein bis vier übernächste Nachbarn zugeordnet. Dabei handelt es sich um diejenigen Tasten, die eine Ecke mit der Haupttaste gemeinsam haben. Im Falle der Taste 1 als Haupttaste wäre die Taste 6 übernächster Nachbar. Im Falle der Taste 10 als Haupttaste wären die Tasten 5, 7, 13, 15 übernächste Nachbarn.

Prüft man die Tasteneingabe entsprechend Figur 2a gemäß dem Schema aus Figur 1, wird zunächst festgestellt, dass die Tasten 6, 7, 8, 10, 11, 12, 14, 15 angesprochen haben. Es handelt sich nicht um das Signal nur einer Taste. Deswegen werden die Relationen Haupttaste ― nächster Nachbar durchgeprüft. Vier Felder würden jeweils zwei nächste Nachbarn und fünf nicht zuordenbare Felder als Haupttaste aufweisen, nämlich die 6, 8, 12, 14, 15. Zwei Felder würden als Haupttasten drei nächste Nachbarn aufweisen, nämlich die Felder 7 und 10. Das Feld 11 würde als Haupttaste vier nächste Nachbarn aufweisen sowie drei Felder, die nicht zuordenbar wären. Es ist also keine eindeutige Relation Haupttaste ― nächster Nachbar auf die Tastenkombination abbildbar, bei der alle Teilsignale zugeordnet werden können.

Daher wird in einem nächsten Schritt auch nach passenden Relationen Haupttaste ― nächster Nachbar ― übernächster Nachbar gesucht. In diesem Fall findet man als eindeutige Relation die Haupttaste 11 mit den nächsten Nachbarn 7, 10, 12, 15 und den übernächsten Nachbarn 6, 8, 14. Damit ist Taste 11 die Haupttaste und die Berührung für die Haupttaste 11 gültig.

Dieses Verfahren führt auch zu einem Ergebnis, wenn die Berührung am Rande des Feldes statt findet, wie in Figur 2b dargestellt. Die Signale 2, 3 und 4 sind stark genug, um berücksichtig zu werden. Da es sich nicht um das Signal nur eines Tastschalters handelt, wird nach einer eindeutigen Relation Haupttaste ― nächster Nachbar gesucht. Diese findet man in der Relation Haupttaste gleich 3 und nächste Nachbarn gleich 4 und 2. Damit ist die Taste 3 die Haupttaste und die Betätigung für die Haupttaste 3 gültig.

In der Betätigung entsprechend der Figur 2c werden die Signale der Tasten 1 und 2 nicht berücksichtigt, da sie zu schwach sind. Übrig bleiben die Signale der Tasten 5, 6, 7, 9, 10, 11. Es lässt sich keine eindeutige Relation Haupttaste ― nächster Nachbar nachweisen. Auch bei der Prüfung auf die Relation Haupttaste ― nächster Nachbar ― übernächster Nachbar kommt man zu keinem eindeutigen Ergebnis. Es sind zwei Relationen feststellbar, nämlich entweder mit 6 als Haupttaste oder mit 10 als Haupttaste. Daher ist diese Betätigung des Tastenfeldes ungültig.

## Patentansprüche

1. Verfahren zur automatischen Bestimmung einer gültigen oder ungültigen Tasteneingabe bei einem Tastenfeld aus Tasten, die benachbart zueinander angeordnet sind, indem
- jeder Taste als Haupttaste jene benachbart angeordnete Tasten als nächste Nachbarn zugeordnet werden, welche die gleiche höchste Wahrscheinlichkeit aufweisen, zusammen mit der Haupttaste betätigt zu werden,
- jeder Taste als Haupttaste jene benachbart angeordneten Tasten als übernächste Nachbarn zugeordnet werden, welche die gleiche nächsthöchste Wahrscheinlichkeit aufweisen, zusammen mit der Haupttaste betätigt zu werden,
- bei jedem Signal, das durch Betätigen einer oder mehrerer Tasten erzeugt wird, geprüft wird:
• wird das Signal von nur einer Taste erzeugt, dann ist die Tasteneingabe für diese Taste gültig;
• wird das Signal von mehreren Tasten erzeugt und ist diesen Tasten eine eindeutige Relation Haupttaste - nächster Nachbar zuzuordnen, dann ist die Tasteneingabe für die ermittelte Haupttaste gültig;
• wird das Signal von mehreren Tasten erzeugt und ist diesen Tasten eine eindeutige Relation Haupttaste - nächster Nachbar- übernächster Nachbar zuzuordnen, dann ist die Tasteneingabe für die ermittelte Haupttaste gültig;
• ansonsten die Tasteneingabe als ungültig behandelt wird,
wobei die einzelnen Prüfschritte nacheinander ausgeführt werden und die Prüfung beendet wird, sobald bei einem Prüfschritt eine Tasteneingabe für gültig befunden wird.

2. Verfahren nach Anspruch 1, **dadurch gekennzeichnet, dass** jedes von einer Taste erzeugte Signal bzw. Teilsignal eine Schaltschwelle überschreiten muss, bevor es bei der Prüfung auf Gültigkeit der Tasteneingabe berücksichtigt wird.

3. Verfahren nach einem der Ansprüche 1 oder 2, **dadurch gekennzeichnet, dass** es an einem Tastenfeld aus kapazitiven Tastschaltern ausgeführt wird.

4. Verfahren nach einem der Ansprüche 1 oder 2, **dadurch gekennzeichnet, dass** es an einem Tastenfeld aus Feldeffekt-Tastschaltern ausgeführt wird.

5. Verfahren nach Anspruch 4, **dadurch gekennzeichnet, dass** jeder Feldeffekt-Tastschalter ein analoges Signal erzeugt, das sich stetig mit der Beeinflussung des Feldes durch ein betätigendes Objekt gleichsinnig ändert.

6. Verfahren zur automatischen Bestimmung einer gültigen oder ungültigen Tasteneingabe bei einem Tastenfeld aus Tasten, die benachbart zueinander angeordnet sind, indem
- jeder Taste als Haupttaste jene benachbart angeordneten Tasten als nächste Nachbarn zugeordnet werden, welche eine Kante mit der Haupttaste gemeinsam haben,
- jeder Taste als Haupttaste jene benachbart angeordneten Tasten als übernächste Nachbarn zugeordnet werden, welche eine Ecke mit der Haupttaste gemeinsam haben,
- bei jedem Signal, das durch Betätigen einer oder mehrerer Tasten erzeugt wird, geprüft wird:
• wird das Signal von nur einer Taste erzeugt, dann ist die Tasteneingabe für diese Taste gültig;
• wird das Signal von mehreren Tasten erzeugt und ist diesen Tasten eine eindeutige Relation Haupttaste - nächster Nachbar zuzuordnen, dann ist die Tasteneingabe für die ermittelte Haupttaste gültig;
• wird das Signal von mehreren Tasten erzeugt und ist diesen Tasten eine eindeutige Relation Haupttaste - nächster Nachbar - übernächster Nachbar zuzuordnen, dann ist die Tasteneingabe für die ermittelte Haupttaste gültig;
• ansonsten die Tasteneingabe als ungültig behandelt wird,
wobei die einzelnen Prüfschritte nacheinander ausgeführt werden und die Prüfung beendet wird, sobald bei einem Prüfschritt eine Tasteneingabe für gültig befunden wird.

7. Verfahren nach Anspruch 6, **dadurch gekennzeichnet, dass** jedes von einer Taste erzeugte Signal bzw. Teilsignal eine Schaltschwelle überschreiten muss, bevor es bei der Prüfung auf Gültigkeit der Tasteneingabe berücksichtigt wird.

8. Verfahren nach einem der Ansprüche 6 oder 7, **dadurch gekennzeichnet, dass** es an einem Tastenfeld aus kapazitiven Tastschaltern ausgeführt wird.

9. Verfahren nach einem der Ansprüche 6 oder 7, **dadurch gekennzeichnet, dass** es an einem Tastenfeld aus Feldeffekt-Tastschaltern ausgeführt wird.

10. Verfahren nach Anspruch 9, **dadurch gekennzeichnet, dass** jeder Feldeffekt-Tastschalter ein analoges Signal erzeugt, das sich stetig mit der Beeinflussung des Feldes durch ein betätigendes Objekt gleichsinnig ändert.

## Claims

1. Method for the automatic determination of a valid or invalid key input on a keypad comprising keys which are arranged adjacent to one another, in which
- each key, as the main key, is assigned those adjacently arranged keys, as the closest neighbours, which have the same highest probability of being operated together with the main key,
- each key, as the main key, is assigned those adjacently arranged keys, as the next but one neighbours, which have the same next highest probability of being operated together with the main key,
- the following is checked for each signal which is generated by operating one or more keys:
• if the signal is generated by only one key, the key input for this key is valid;
• if the signal is generated by a plurality of keys and these keys can be assigned an unambiguous main key - closest neighbour relationship, the key input for the main key determined is valid;
• if the signal is generated by a plurality of keys and these keys can be assigned an unambiguous main key - closest neighbour - next but one neighbour relationship, the key input for the main key determined is valid;
• otherwise, the key input is treated as invalid,
the individual checking steps being carried out in succession and the check being ended as soon as a key input is found to be valid in a checking step.

2. Method according to Claim 1, **characterized in that** each signal or partial signal generated by a key must exceed a switching threshold before it is taken into account when checking for validity of the key input.

3. Method according to either of Claims 1 and 2, **characterized in that** it is carried out on a keypad comprising capacitive pushbutton switches.

4. Method according to either of Claims 1 and 2, **characterized in that** it is carried out on a keypad comprising field effect pushbutton switches.

5. Method according to Claim 4, **characterized in that** each field effect pushbutton switch generates an analogue signal which changes continuously in the same sense as the pad is influenced by an object being operated.

6. Method for the automatic determination of a valid or invalid key input on a keypad comprising keys which are arranged adjacent to one another, in which
- each key, as the main key, is assigned those adjacently arranged keys, as the closest neighbours, which have an edge in common with the main key,
- each key, as the main key, is assigned those adjacently arranged keys, as the next but one neighbours, which have a corner in common with the main key,
- the following is checked for each signal which is generated by operating one or more keys:
• if the signal is generated by only one key, the key input for this key is valid;
• if the signal is generated by a plurality of keys and these keys can be assigned an unambiguous main key - closest neighbour relationship, the key input for the main key determined is valid;
• if the signal is generated by a plurality of keys and these keys can be assigned an unambiguous main key - closest neighbour - next but one neighbour relationship, the key input for the main key determined is valid;
• otherwise, the key input is treated as invalid,
the individual checking steps being carried out in succession and the check being ended as soon as a key input is found to be valid in a checking step.

7. Method according to Claim 6, **characterized in that** each signal or partial signal generated by a key must exceed a switching threshold before it is taken into account when checking for validity of the key input.

8. Method according to either of Claims 6 and 7, **characterized in that** it is carried out on a keypad comprising capacitive pushbutton switches.

9. Method according to either of Claims 6 and 7, **characterized in that** it is carried out on a keypad comprising field effect pushbutton switches.

10. Method according to Claim 9, **characterized in that** each field effect pushbutton switch generates an analogue signal which changes continuously in the same sense as the pad is influenced by an object being operated.

## Revendications

1. Procédé pour déterminer de manière automatique la validité ou l'invalidité d'une frappe de touche sur un clavier constitué de touches qui sont disposées de manière contiguë l'une à l'autre, dans lequel
- à chaque touche, considérée comme touche principale, sont associées, en tant que touches immédiatement voisines, ces touches, disposées de manière contiguë, qui présentent la même probabilité, la plus élevée, d'être actionnées conjointement avec la touche principale,
- à chaque touche, considérée comme touche principale, sont associées, en tant que deuxièmes touches immédiatement voisines, ces touches, disposées de manière contiguë, qui présentent la même probabilité immédiatement inférieure, la plus élevée, d'être actionnées conjointement avec la touche principale,
- pour chaque signal qui est produit par l'actionnement d'une ou de plusieurs touches, il est examiné:
. si le signal est produit par une seule touche, alors la frappe de touche pour cette touche est valide;
. si le signal est produit par plusieurs touches et si une relation sans ambiguïté touche principale - touche immédiatement voisine est à associer à ces touches, alors la frappe de touche pour la touche principale déterminée est valide;
. si le signal est produit par plusieurs touches et si une relation sans ambiguïté touche principale - touche immédiatement voisine - deuxième touche immédiatement voisine est à associer à ces touches, alors la frappe de touche pour la touche principale déterminée est valide;
. sinon, la frappe de touche est traitée comme étant invalide,
où les étapes d'examen individuelles sont exécutées l'une après l'autre et l'examen est terminé dès que, lors d'une étape d'examen, une frappe de touche est jugée valide.

2. Procédé selon la revendication 1, **caractérisé en ce que** chaque signal, ou bien chaque signal partiel, produit par une touche, doit dépasser un seuil de commutation avant d'être pris en considération lors de l'examen de validité de la frappe de touche.

3. Procédé selon l'une des revendications 1 ou 2, **caractérisé en ce qu'**il est réalisé dans un clavier constitué de touches à effleurement capacitives.

4. Procédé selon l'une des revendications 1 ou 2, **caractérisé en ce qu'**il est réalisé dans un clavier constitué de touches à effleurement à effet de champ.

5. Procédé selon la revendication 4, **caractérisé en ce que** chaque touche à effleurement à effet de champ produit un signal analogique qui se modifie de manière continue dans le même sens que celui selon lequel s'exerce l'influence sur le champ d'un objet opérant.

6. Procédé pour déterminer de manière automatique la validité ou l'invalidité d'une frappe de touche sur un clavier constitué de touches qui sont disposées de manière contiguë l'une à l'autre, dans lequel
- à chaque touche, considérée comme touche principale, sont associées, en tant que touches immédiatement voisines, ces touches, disposées de manière contiguë, qui ont un côté commun avec la touche principale,
- à chaque touche, considérée comme touche principale, sont associées, en tant que deuxièmes touches immédiatement voisines, ces touches, disposées de manière contiguë, qui ont un coin commun avec la touche principale,
- pour chaque signal qui est produit par l'actionnement d'une ou de plusieurs touches, il est examiné:
. si le signal est produit par une seule touche, alors la frappe de touche pour cette touche est valide;
. si le signal est produit par plusieurs touches et si une relation sans ambiguïté touche principale - touche immédiatement voisine est à associer à ces touches, alors la frappe de touche pour la touche principale déterminée est valide;
. si le signal est produit par plusieurs touches et si une relation sans ambiguïté touche principale - touche immédiatement voisine - deuxième touche immédiatement voisine est à associer à ces touches, alors la frappe de touche pour la touche principale déterminée est valide;
. sinon, la frappe de touche est traitée comme étant invalide,
où les étapes d'examen individuelles sont exécutées l'une après l'autre et l'examen est terminé dès que, lors d'une étape d'examen, une frappe de touche est jugée valide.

7. Procédé selon la revendication 6, **caractérisé en ce que** chaque signal, ou bien chaque signal partiel, produit par une touche, doit dépasser un seuil de commutation avant d'être pris en considération lors de l'examen de validité de la frappe de touche.

8. Procédé selon l'une des revendications 6 ou 7, **caractérisé en ce qu'**il est réalisé dans un clavier constitué de touches à effleurement capacitives.

9. Procédé selon l'une des revendications 6 ou 7, **caractérisé en ce qu'**il est réalisé dans un clavier constitué de touches à effleurement à effet de champ.

10. Procédé selon la revendication 9, **caractérisé en ce que** chaque touche à effleurement à effet de champ produit un signal analogique qui se modifie de manière continue dans le même sens que celui selon lequel s'exerce l'influence sur le champ d'un objet opérant.
